# EUROPEAN PATENT SPECIFICATION

(11) **EP 3 207 971 B1**
(45) Date of publication and mention of the grant of the patent: **25.03.2020**
(21) Application number: 16156365.5
(22) Date of filing: 18.02.2016
(51) Int. Cl.: B01D 17/02, B01D 17/04, C10G 33/06, C02F 1/40

(54) **METHOD AND SYSTEM FOR CLEANING OILY WASTE**
VERFAHREN UND SYSTEM ZUR REINIGUNG VON ÖLIGEN ABFÄLLEN
PROCÉDÉ ET SYSTÈME DE NETTOYAGE DE RÉSIDUS HUILEUX

(43) Date of publication of application: 23.08.2017
(73) Proprietor: Alfa Laval Corporate AB, 221 00 Lund (SE)
(72) Inventor: PALLMAR, Anders, 141 43 HUDDINGE (SE)
(74) Representative: Alfa Laval Attorneys

(56) References cited:
- EP-A1- 2 522 635
- EP-A1- 2 679 657
- EP-A1- 2 682 372
- EP-A1- 2 883 947
- GB-A- 287 438
- GB-A- 654 666
- GB-A- 2 239 655
- JP-A- H01 301 784
- US-A1- 2015 360 971

## Description

### Technical Field

The present invention relates to a method for cleaning oily waste comprising water, solids and at least one fuel oil, such as oily waste comprising water, solids and at least one fuel oil provided on board a ship or in a power plant. In addition, the present invention relates to a system for cleaning oily waste comprising water, solids and at least one fuel oil provided on board a ship or in a power plant.

### Background of the Invention

On board ships and in power plants, oily waste comprising water, solids and one or more oils may be generated by many different devices. For example, fuel oil waste comprising water, solids and one or more fuel oils may be generated by one or more fuel oil treatment devices and/or the operation of one or more engine installations. More specifically, fuel oil waste may be generated, for example, as tank sediment in a settling tank or another tank for fuel oil, as a sludge phase discharged from a centrifugal separator cleaning fuel oil, as a filter reject from a fuel oil filter and/or as a leakage product.

Usually, fuel oil waste generated on board ships and in power plants by one or more fuel oil treatment devices and/or one or more engine installations is collected in a collecting tank. Thus, the collecting tank is arranged to receive fuel oil waste from one or more different oil waste sources and is thereby arranged to accommodate an amount of oily waste comprising fuel oil waste from one or more different oil waste sources. Accordingly, the oily waste accommodated in the collecting tank comprises water, solids and at least one fuel oil.

There are a lot of different environmental legislations that regulate the disposal of oily wastes, such as oily waste provided in collecting tanks on board ships and in power plants. Thus, the methods and systems utilized for the management and disposal of oily waste provided in collecting tanks on board ships and in power plants need to enable fulfilment of the environmental legislations.

One known procedure for management and disposal of oily waste provided in a collecting tank on board a ship or in a power plant comprises a first step of boiling off the water content in the oily waste by heating the content of the collecting tank. The residue of the heating step will then be a dried oily waste, i.e. a contaminated dried oil. The dried oily waste is normally stored in a storage tank and then commonly burned in an incinerator. However, the use of incinerators for burning of a mixture of oil and solids is limited by environmental legislations.

Another known procedure for management and disposal of oily waste provided in a collecting tank on board a ship or in a power plant involves cleaning of the oily waste before disposal by means of a three phase separator. Thereby the oily waste is separated by the three phase separator into oil, water and solids, i.e. the oily waste is processed into recovered oil, cleaned water and dry sludge. Thus, this method enables recovery of oil in the oily waste and thereby reuse of oil present in the oily waste. However, systems comprising such a three phase separator, as e.g. in EP2679657A1, demand a major installation work that might be hard to carry out in particular on a sailing ship. In addition, the separated water phase will still be slightly oil contaminated and has to be cleaned by a bilge water separator before being pumped into the sea.

Accordingly, there is still a need of an improved and simplified method for cleaning oily waste comprising water, solids and at least one fuel oil, which cleaning method may be utilized in the process for management and disposal of such oily waste on board a ship or in a power plant and which cleaning method enables recovery of oil present in the oily waste.

### Summary of the Invention

Thus, one object of the present invention is to provide an improved and simplified method for cleaning oily waste comprising water, solids and at least one fuel oil, which cleaning method may be utilized in the process for management and disposal of such oily waste on board a ship or in a power plant and which cleaning method enables recovery of oil present in the oily waste.

As a first aspect of the present invention, there is provided a method according to claim 1.

The method of the first aspect of the invention is advantageous in that no residual oil contaminated water phase is obtained that need further cleaning in a further water phase treatment system. Furthermore, the method of the first aspect of the invention produces a residual sludge phase from which oil has been removed. The residual sludge phase may be landed ashore as dry waste.

The method of the first aspect of the invention is also advantageous in that it enables recovery of oil from the oily waste in the form of the cleaned oil phase discharged from the separator and thereby reuse of oil present in the oily waste. Depending on the content of the cleaned oil phase, the re-use applications of the cleaned oil phase might differ. For example, the cleaned oil phase may be transferred to a boiler fuel tank and reused as boiler fuel. Furthermore, in case the cleaned oil phase comprises one or more fuel oils and less than an acceptable level of other oils, the cleaned oil phase may, for example, be recirculated to a fuel oil bunker tank or fuel oil settling tank and reused as fuel oil for an engine installation. In addition, if the cleaned oil phase is burnt in an incinerator the deposit formation, i.e. the production of combustion residues, will be less compared to if an oily sludge is burnt in an incinerator.

Furthermore, the method of the first aspect of the invention is advantageous in that it is relatively easy to handle and may be performed by equipment that is relatively easy to install and run on sailing ships and in power plants.

In addition, the method of the first aspect is advantageous in that it enables improved management of oily wastes comprising one or more fuel oils having a high density, i.e. even fuel oils having a density higher than 991 kg/m³ at 15 °C, such as fuel oils having densities of 991-1010 kg/m³ at 15 °C. This is due to the fact that a two-phase centrifugal separator is utilized in the method. Two-phase centrifugal separators can handle oil densities above 991 kg/m³ at 15 °C.

The term "fuel oil waste" refers herein to oily waste/oily sludge/residues generated by treatment, handling or use of fuel oil. The fuel oil waste referred to herein is a mixture comprising water, solids and one or more fuel oils. However, it may also comprise other residues. Fuel oil waste may be generated by, for example, one or more fuel oil treatment devices for pre-treatment of fuel oil before use in an engine installation on board a ship or in a power plant and/or the operation of one or more engine installations on board a ship or in a power plant. For example, fuel oil waste may be generated as a tank sediment in a settling tank or another tank for fuel oil, as a sludge phase discharged from a centrifugal separator cleaning fuel oil, as a filter reject from a fuel oil filter and/or as a leakage product. In addition, fuel oil waste may be generated as a leakage product during operation of an engine installation. Thus, oil waste sources generating fuel oil waste during use may be fuel oil treatment devices such as, for example, settling tanks or other tanks for fuel oil, separators for cleaning fuel oil, filters for fuel oil, other components of a fuel oil treatment system and engine installations on board a ship or in a power plant.

The term "oily waste" refers herein to a mixture comprising water, solids and at least one oil. In accordance with the above, the oily waste to be cleaned by the method of the first aspect of the invention is a mixture comprising water, solids and at least one fuel oil.

The oily waste to be cleaned by the method of the first aspect may comprise fuel oil waste from treatment, handling or use of fuel oil, i.e. fuel oil waste generated by one or more oil waste sources. Thus, the oily waste to be cleaned by the method of the first aspect of the invention may, for example, comprise fuel oil waste from one or more oil fuel oil treatment devices for pre-treatment of fuel oil before use in an engine installation on board a ship or in a power plant and/or fuel oil waste from an engine installation on board a ship or in a power plant. Furthermore, the oily waste to be cleaned may, in addition to fuel oil waste provided from one or more oil waste sources, comprise further waste material such as further water and/or further solids and/or further oil(s) provided by one or more other waste sources.

Accordingly, the oily waste to be cleaned by the method of the first aspect comprises at least water, solids and one fuel oil, but may also comprise one or more further constituents such as, for example, one or more further oils, such as one or more further fuel oils and/or one or more lubricating oils. The further constituents may be introduced into the oily waste to be cleaned by fuel oil waste, i.e. these constituents may be comprised in fuel oil waste that is added to the oily waste to be cleaned, or may be added to the oily waste separately.

Solids (i.e. solid components/constituents/elements/particles) comprised in the oily waste to be cleaned by the method of the first aspect may, for example, be inorganic and/or organic solids, including precipitated oil compounds. For example the solids may be one or more of catalyst fines, rust, metallic particles, precipitated asphaltenes and silicon dioxide. Catalyst fines are residues from the refining process of crude oil known as catalytic cracking, wherein long hydrocarbon molecules are cracked into shorter molecules. Typically, the content of solids in the oily waste to be cleaned may be 10-10000 ppm.

The term "fuel oil" refers herein to an oil intended for use in an engine for the generation of power, such as in an engine on board a ship or in a power plant. More specifically, the term "fuel oil" refers herein to an oil as defined in ISO 8217, Petroleum products - Fuels (class F) - Specification of marine fuels, editions 2005 and 2012, or an oil component/phase originating from the pre-treatment of such an oil before use in an engine on board a ship or in a power plant. A fuel oil may be obtained as a fraction from petroleum distillation, either as a distillate or as a residue. Diesel is regarded as a fuel oil herein.

As mentioned above, the oily waste to be cleaned by the method of the first aspect comprises at least one fuel oil. Thus, the oily waste to be cleaned may comprise only one fuel oil. However, alternatively it may comprise more than one fuel oil. In case the oily waste to be cleaned comprises two or more fuel oils, the different fuel oils differ in one or more characteristics, e.g. they may have different density, may comprise different additives or may originate from different pre-treatment devices. For example, different fuel oils may have different sulphur content.

The term "lubricating oil" refers herein to a system oil, which may be used for reducing friction, such as for reducing friction in marine diesel engines or in a power plant. SAE 30 and 40 oils are examples of lubricating oils.

The term "dried oily waste" refers herein to oily waste that has been dried (i.e. that has been subjected to a water removal procedure). The dried oily waste comprises no water or essentially no water, i.e. at least less than 10 wt% water, preferably less than 5 wt% water, more preferably less than 3 wt% water, most preferably less than 1 wt% water.

The term "two-phase centrifugal separator" refers herein to a separator in which material is separated into two phases due to centrifugal forces. Thus, the centrifugal separator is a clarifier. The separator may comprise a rotor body which is rotatable around an axis of rotation (R). The axis of rotation may be a vertical axis. The rotor body may have a separation chamber for separating the dried oily waste into a cleaned oil phase and a sludge phase comprising solids from the dried oily waste. The separator has thus an inlet for the dried oily waste that is to be separated and a sludge outlet for the separated sludge phase and a liquid outlet for the separated cleaned oil phase. The separator is free of further liquid outlets, i.e. it comprises a single liquid outlet.

The two-phase centrifugal separator comprises both a stack of separation discs and a screw conveyor. The disc stack may be positioned in the separation chamber and the screw conveyor may be arranged in the rotor body and rotatable around the same axis of rotation (R) but at a speed which differs from the rotation speed of the rotor. The screw conveyor is arranged to transport the separated sludge phase towards and out of the sludge outlet.

In embodiments of the method of the first aspect, the step of providing oily waste to be cleaned comprises pooling fuel oil waste provided by one or more oil waste sources so as to form at least parts of the oily waste to be cleaned. Thus, in these embodiments the oily waste to be cleaned comprises fuel oil waste from one or more sources generating fuel oil waste.

In embodiments of the method of the first aspect, the step of providing oily waste to be cleaned comprises pooling fuel oil waste provided by one or more oil waste sources and further waste material such as water and/or solids and/or one or more oil from one or more other waste sources so as to form at least parts of the oily waste to be cleaned. Consequently, in these embodiments, the oily waste to be cleaned comprises fuel oil waste from one or more oil waste sources generating fuel oil waste and further waste material such as water and/or solids and/or one or more oil generated by one or more other waste sources.

The step of removing water of the method of the first aspect involves removing water from the provided oily waste to be cleaned such that a dried oily waste is produced. Thus, the aim of the water removal step is to reduce the water content of the oily waste to be cleaned. For example, the oily waste to be cleaned may be comprised in a water removal tank during the step of removing water, which water removal tank is provided with and/or connected to a water removal arrangement for removing water from the oily waste.

Thus, in embodiments of the method of the first aspect, the step of providing oily waste to be cleaned comprises providing oily waste to be cleaned in a water removal tank, whereby the oily waste to be cleaned is comprised in the water removal tank during the step of removing water.

In embodiments of the method of the first aspect, the step of providing oily waste to be cleaned comprises providing oily waste to be cleaned in a water removal tank by collecting/pooling fuel oil waste provided by one or more oil waste sources, and optionally further waste material such as further water and/or solids and/or one or more oil from one or more other waste sources, in the water removal tank, whereby the collected/pooled fuel oil waste and optional further waste material form the oily waste to be cleaned. In these embodiments, the oily waste to be cleaned is comprised in the water removal tank during the water removal step.

Furthermore, the method of the first aspect of the present invention may be a method for cleaning oily waste collected in a collecting tank on board a ship or in a power plant.

Thus, in embodiments of the method of the first aspect, the step of providing oily waste to be cleaned comprises providing oily waste to be cleaned in a collecting tank and transferring oily waste to be cleaned from the collecting tank to a water removal tank. More specifically, in these embodiments the step of providing oily waste to be cleaned comprises a first sub-step of providing oily waste to be cleaned in a collecting tank and a further sub-step of transferring oily waste to be cleaned from the collecting tank to a water removal tank so as to provide the water removal tank with oily waste to be cleaned. The sub-step of providing oily waste to be cleaned in a collecting tank may comprise providing oily waste to be cleaned in the collecting tank by collecting/pooling fuel oil waste provided by one or more oil waste sources in the collecting tank. In accordance with the above, further waste material such as water and/or solids and/or one or more oil may also be provided to the collecting tank in these embodiments so as to form part of the oily waste to be cleaned. In these embodiments, the oily waste to be cleaned is comprised in the water removal tank during the water removal step.

In embodiments of the method of the first aspect, the step of providing oily waste to be cleaned comprises a first sub-step of collecting fuel oil waste provided by at least one oil waste source, and optionally further waste material such as further water and/or solids and/or one or more oils provided by one or more other waste sources, in one or more collecting tanks, and a further sub-step of transferring collected fuel oil waste and optionally collected further waste material from the one or more collecting tanks to a water removal tank. Accordingly, in these embodiments the oily waste to be cleaned is formed/provided in the water removal tank by collecting/pooling fuel oil waste and optional further waste material transferred from the one or more collecting tanks to the water removal tank. In these embodiments, the oily waste to be cleaned is comprised in the water removal tank during the water removal step.

In embodiments of the method of the first aspect, the step of removing water from the oily waste to be cleaned comprises heating the oily waste so as to boil off water from the oily waste to be cleaned. Thus, in these embodiments the oily waste is heated to a temperature at which water boils off from the oily waste, i.e. to a temperature at or above the boiling point of water, but at which the oil(s) comprised in the oily waste is/are not vaporized. Accordingly, the temperature to which the oily waste is heated in these embodiments is below the temperature at which the oil(s) comprised in the oily waste is/are vaporized but above the temperature at which the water comprised in the oily waste boils off. In case the oily waste to be cleaned is comprised in a water removal tank during the water removal step, the step of water removal may comprise heating by means of heating coils, e.g. electric coils or steam coils, in the water removal tank or by any other suitable heating means or heating arrangement. Furthermore, in case the oily waste to be cleaned is comprised in a water removal tank during the water removal step, water vapour generated during the water removal step may exit the water removal tank through an outlet for water vapour of the water removal tank. The method of these embodiments may then optionally further comprise a step of evacuating the water vapour through the water vapour outlet of the water removal tank by means of an evacuation fan.

In embodiments of the method of the first aspect, the step of removing water from the oily waste to be cleaned comprises heating the oily waste to be cleaned so as to facilitate evaporation of water from the oily waste to be cleaned. Thus, in these embodiments the oily waste to be cleaned is heated to a temperature at which evaporation is facilitated/increased. In case the oily waste to be cleaned is comprised in a water removal tank during the water removal step, the step of water removal may comprise heating by means of heating coils, e.g. electric coils or steam coils, in the water removal tank or by any other suitable heating means or heating arrangement. In case the oily waste to be cleaned is comprised in a water removal tank during the water removal step, the method of these embodiments may then optionally further comprise a step of evacuating the water vapour through a water vapour outlet of the water removal tank by means of an evacuation fan.

The step of introducing dried oily waste produced in the step of removing water into a two-phase centrifugal separator of the method of the first aspect may be performed by any suitable transferring arrangement. For example, the introduction may be performed by pumping dried oily waste through the liquid inlet into the two-phase centrifugal separator.

The step of discharging the sludge phase through the sludge outlet of the two-phase centrifugal separator of the method of the first aspect may be performed continuously or step-wise. The discharged sludge phase may be collected in a sludge phase tank.

The step of discharging the cleaned oil phase through the liquid outlet of the two-phase centrifugal separator of the method of the first aspect may be performed continuously. The discharged cleaned oil phase may be collected in an oil phase tank.

In embodiments of the method of the first aspect in which the two-phase centrifugal separator comprises a screw conveyor and a stack of separation discs, the step of discharging said sludge phase comprises discharging said sludge phase through the sludge outlet of the two-phase centrifugal separator by means of the screw conveyor.

In embodiments of the method of the first aspect, the at least one fuel oil constitutes at least 80 wt%, such as 85 wt%, 90 wt%, 95 wt% or 100 wt%, of all oils of the provided oily waste to be cleaned, i.e. the one or more fuel oil constitute in total at least 80 wt%, such as 85 wt%, 90 wt%, 95 wt% or 100 wt%, of all oils of the provided oily waste to be cleaned. Thus, in these embodiments the fuel oil(s) constitute the majority of the oils of the oily waste to be cleaned.

In embodiments of the method of the first aspect, the provided oily waste to be cleaned comprises a single oil, which is a fuel oil.

In embodiments of the method of the first aspect, the method comprises further a step of transferring the cleaned oil phase discharged from the separator to a boiler fuel tank, i.e. a storage tank for boiler fuel. The transfer may be performed by any suitable transferring arrangement. For example, the transfer may be performed by pumping discharged cleaned oil phase to the boiler fuel tank. The discharged oil phase may then be reused as boiler fuel. Thus, in these embodiments the method of the first aspect may comprise a further step of using the cleaned oil phase transferred to a boiler fuel tank as boiler fuel, i.e. as fuel for a boiler.

In case the cleaned oil phase comprises one or more fuel oils and less than an acceptable level of other oils, the discharged cleaned oil phase may, for example, be recirculated to a fuel oil bunker tank or a fuel oil settling tank and reused as fuel in an engine installation.

Thus, in embodiments of the method of the first aspect, the method further comprises a step of transferring the discharged cleaned oil phase to a fuel oil bunker tank or a fuel oil settling tank. The transfer may be performed by any suitable transferring arrangement. For example, the transfer may be performed by pumping discharged cleaned oil phase to the fuel oil bunker tank or the fuel oil settling tank. In these embodiments the cleaned oil phase comprises one or more fuel oils and less than an acceptable level of other oils.

In embodiments of the method of the first aspect, the method further comprises a step of combining additional dry waste material with the dried oily waste after the water removal step but before the separation step. In these embodiments the additional dry waste material comprises solids and/or one or more oil, but has a water content according to the above definition of "dried oily waste". The additional dry waste material may comprise dry waste material from one or more oil waste sources.

Another object of the present invention is to provide an improved and simplified system for cleaning oily waste comprising water, solids and at least one fuel oil, which system may be utilized in the process for management and disposal of such oily waste on board a ship or in a power plant and which enables recovery of oil present in the oily waste.

According to a second aspect of the present invention, there is provided a system according to claim 6.

The terms and definitions used in relation to the second aspect are as discussed under the first aspect above.

In accordance with the above, the system of the second aspect comprises one or more fuel oil treatment devices arranged to provide fuel oil waste (i.e. fuel oil waste sources) during use. Each fuel oil treatment device is a device utilized for pre-treatment of fuel oil before use in an engine installation on board a ship or in a power plant, and may be, for example, a settling tank or other tank for fuel oil, a separator for cleaning fuel oil (e.g. a centrifugal separator), a filter for fuel oil, or another component of a fuel oil treatment system on board a ship or in a power plant.

As mentioned above, the system of the second aspect may comprise one or more fuel oil treatment devices. Furthermore, the system of the second aspect may comprise one or more of the same type of fuel oil treatment device, e.g. one or more separator, one or more tank, etc.

The first transferring arrangement and the second transferring arrangement may comprise any suitable transferring means. For example, the first and second transferring arrangements may respectively comprise one or more pumps and one or more transfer pipes. In addition, the first and second transferring arrangements may comprise one or more intermediate collecting tanks.

In embodiments of the system of the second aspect, the water removal tank is arranged to receive fuel oil waste provided by one or more fuel oil treatment devices and optional further waste material provided by one or more other waste sources, which fuel oil waste and optional further waste material have not been pooled before introduction into the waste removal tank. Thereby, the received fuel oil waste and optional further waste material are collected/pooled in the water removal tank and form the oily waste to be cleaned in the water removal tank. In these embodiments, the first transferring arrangement may comprise one or more pipes and one or more pumps.

In other embodiments of the system of the second aspect, the water removal tank is arranged to receive fuel oil waste provided by one or more fuel oil treatment devices and optional further waste material provided by one or more other waste sources that have been pooled in one or more collecting tanks before introduction into the water removal tank. In these embodiments the first transferring arrangement may comprise:
- at least one collecting tank, wherein each collecting tank is arranged to receive fuel oil waste provided by at least one of the at least one fuel oil treatment device and optionally further waste material provided by one or more other waste sources such that fuel oil waste and optionally further waste material are collected in each collecting tank;
- a third transferring arrangement for transferring fuel oil waste from each of the at least one fuel oil treatment device to at least one of the at least one collecting tank and optionally transferring further waste material from one or more other waste sources to one or more of the at least one collecting tank, and
- a fourth transferring arrangement for transferring collected fuel oil waste and optionally collected further waste material from the at least one collecting tank to the water removal tank.

Thus, in these embodiments the first transferring arrangement may comprise one collecting tank, wherein the collecting tank is arranged to receive fuel oil waste provided by all fuel oil treatment devices of the system and optionally further waste material provided by one or more other waste sources. Then the third transferring arrangement is arranged to transfer fuel oil waste from all fuel oil treatment devices of the system, and optionally further waste material from one or more other waste sources, to the collecting tank.

Alternatively, in these embodiments the first transferring arrangement may comprise two or more collecting tanks, wherein each collecting tank is arranged to receive fuel oil waste provided by at least one fuel oil treatment device of the system and optionally further waste material from one or more other waste sources. The third transferring arrangement is then arranged to transfer fuel oil waste from each of the fuel oil treatment devices of the system to at least one of the collecting tanks and optionally further waste material from one or more other waste sources to one or more of the collecting tanks.

The third transferring arrangement and the fourth transferring arrangement may comprise any suitable transferring means. For example, the third and fourth transferring arrangements may respectively comprise one or more pumps and one or more transfer pipes. In addition, the third and fourth transferring means may comprise one or more intermediate collecting tanks.

In embodiments of the system of the second aspect, the water removal arrangement comprises a heating arrangement arranged to supply heat to the oily waste to be cleaned accommodated in the water removal tank so as to boil off water from the oily waste. Thus, in these embodiments the heating arrangement is arranged to heat the oily waste to a temperature at which water boils off from the oily waste, i.e. to a temperature at or above the boiling point of water, but at which the oil(s) comprised in the oily waste is/are not vaporized. Accordingly, the temperature to which the heating arrangement is arranged to heat the oily waste in these embodiments is below the temperature at which the oil(s) comprised in the oily waste is/are vaporized but above the temperature at which the water comprised in the oily waste boils off.

In embodiments of the system of the second aspect, the water removal arrangement comprises a heating arrangement arranged to supply heat to the oily waste to be cleaned accommodated in the water removal tank so as to facilitate evaporation, i.e. increase the evaporation rate, of water from the oily waste. Accordingly, the temperature to which the heating arrangement is arranged to heat the oily waste in these embodiments is a temperature at which evaporation is facilitated/increased.

For example, the heating arrangement may comprise heating coils, e.g. electric coils or steam coils, provided in the water removal tank. The heating coils may, for example, be provided in or at the bottom of the water removal tank.

In case the heating arrangement comprises steam coils provided in the water removal tank, the heating arrangement may further comprise a device for generating heated steam to be supplied to the steam coils, a steam inlet in the water removal tank and a condensed steam outlet in the water removal tank. The steam inlet is then arranged to transfer heated steam from the device for generating heated steam to the steam coils and the condensed steam outlet is then arranged to transfer condensed steam from the steam coils to the outside of the water removal tank, e.g. to transfer the condensed steam back to the device for generating heated steam. The device for generating heated steam may comprise a boiler.

The water removal arrangement of the system of the second aspect may comprise an outlet in the water removal tank for the water removed from the oily waste, i.e. the water removal tank may comprise an outlet for generated water vapour.

In embodiments of the system of the second aspect, the water removal arrangement comprises further an evacuation fan arranged to facilitate evacuation of water vapour from the water removal tank, e.g. through a water vapour outlet of the water removal tank.

In embodiments of the system of the second aspect, the water removal arrangement comprises a water vapour outlet in the water removal tank and an evacuation fan arranged to evacuate water vapour from the water removal tank.

In embodiments of the system of the second aspect, the system may further comprise a fifth transferring arrangement for transferring the discharged cleaned oil phase to a boiler fuel tank, whereby the discharged cleaned oil phase can be re-used as boiler fuel. For example, the fifth transferring arrangement may comprise one or more pumps and one or more transfer pipes.

In embodiments of the system of the second aspect, the system may be arranged for cleaning oily waste comprising one or more fuel oils and less than an acceptable level of other oils. Thereby, the dried oily waste obtained in the water removal tank after the removal of water by the water removal arrangement and the discharged cleaned oil phase comprises also only one or more fuel oils and less than an acceptable level of other oils. Thereby, the discharged cleaned oil phase may be reused, i.e. recirculated to a fuel oil bunker tank or fuel oil settling tank and reused as fuel in an engine installation. Thus, the system of these embodiments may optionally further comprise a sixth transferring arrangement for transferring the discharged cleaned oil phase to a fuel oil bunker tank or a fuel oil settling tank. For example, the sixth transferring arrangement may comprise one or more pumps and one or more transfer pipes. However, alternatively or additionally these embodiments may optionally also comprise the fifth transferring arrangement for transferring the discharged cleaned oil phase to a boiler fuel tank, whereby the discharged cleaned oil phase can be re-used as boiler fuel.

Still other objects and features of the present disclosure will become apparent from the following detailed description considered in conjunction with the accompanying drawings. It is to be understood, however, that the drawings are designed solely for purposes of illustration and not as a definition of the limits of the invention, for which reference should be made to the appended claims. It should further be understood that the drawings are not drawn to scale and that they are merely intended to conceptually illustrate the structures described herein.

### Brief Description of the Drawings

In the drawings, wherein like reference characters denote similar elements throughout the several views:
Figures 1a-c show schematic views of different embodiments of the system for cleaning oily waste according to the present disclosure;
Figure 2 shows a schematic view of another embodiment of the system for cleaning oily waste according to the present disclosure, and
Figure 3 shows a schematic view of one example of a two-phase centrifugal separator that may be utilized in the method and system according to the present disclosure.

### Detailed Description

The method and system according to the present disclosure will be further illustrated by the following description of some embodiments with reference to the accompanying drawings.

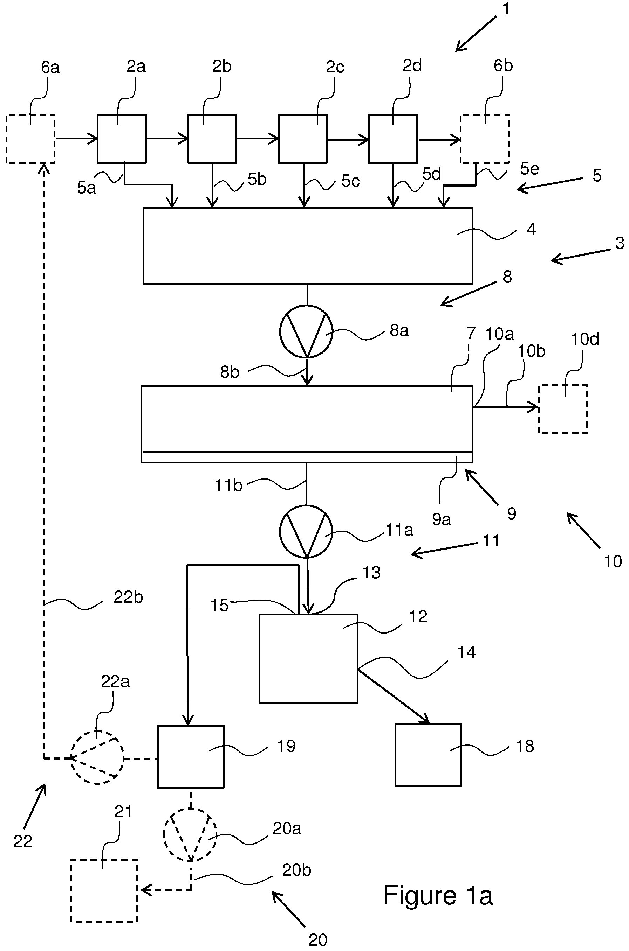

Figure 1a shows a schematic view of one embodiment of a system 1 according to the present disclosure. The system 1 is arranged for cleaning oily waste comprising water, solids and at least one fuel oil. The system 1 shown in Figure 1a comprises four different fuel oil treatment devices 2a-d, which are arranged to treat fuel oil before use in an engine installation on board a ship or in a power plant. As shown in Figure 1a, the fuel oil treatment devices 2a-d are comprised in a fuel oil treatment system in which they are connected in series. Each of the fuel oil treatment devices 2a-d provides fuel oil waste comprising water, solids and one or more fuel oil(s) during use for pre-treatment of fuel oil. Thus, the fuel oil treatment devices 2a-d constitute fuel oil waste sources.

In the system 1 shown in Figure 1a, the first fuel oil treatment device 2a is a settling tank, the second fuel oil treatment device 2b is a separator for cleaning fuel oil, the third fuel oil treatment device 2c is a day tank and the fourth fuel oil treatment device 2d is a fuel oil filter. The settling tank 2a provides fuel oil waste in the form of sediment in the tank during use. The separator 2b provides fuel oil waste in the form of discharged sludge during use. The day tank 2c provides fuel oil waste in the form of sediment in the tank during use. The fuel oil filter 2d provides fuel oil waste in the form of a filter reject during use.

In the system 1 of Figure 1a, the settling tank 2a is arranged to be provided with untreated fuel oil from a fuel oil bunker tank 6a. The fuel oil bunker tank 6a is shown with dashed lines in Fig. 1a and may optionally be comprised in the system 1.

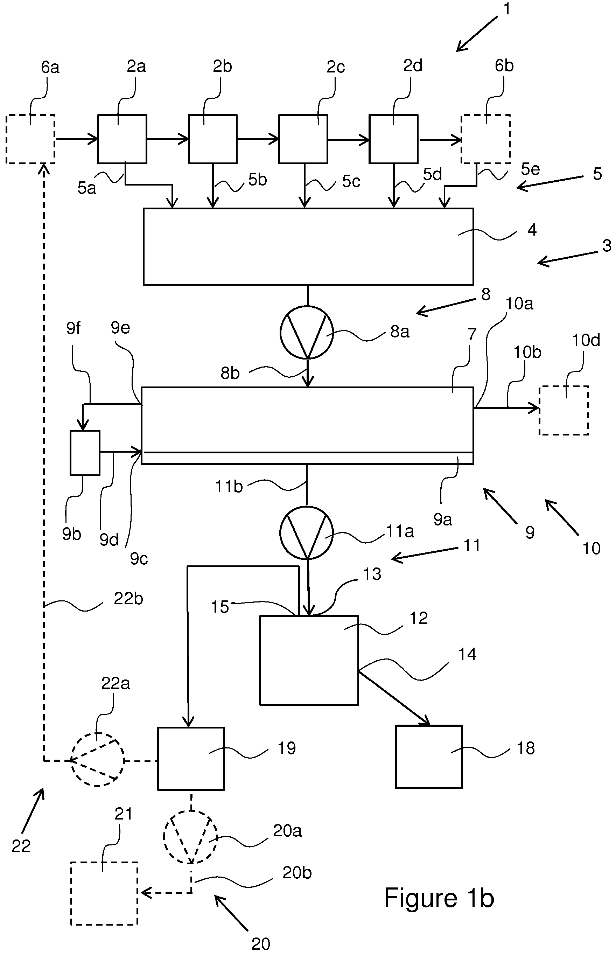

Furthermore, the system of Figure 1a comprises a first transferring arrangement 3 and a water removal tank 7. The first transferring arrangement 3 is arranged for transferring fuel oil waste from the four fuel oil treatment devices 2a-d and an engine 6b to the water removal tank 7. The engine 6b is shown with dashed lines in Fig. 1b and may optionally be comprised in the system 1. The engine 6b provides fuel oil waste in the form of a leakage product during use. The water removal tank 7 is arranged to receive fuel oil waste from the four fuel oil treatment devices 2a-d and the engine 6b such that the transferred fuel oil waste are collected/pooled in the water removal tank 7. The fuel oil waste collected/pooled in the water removal tank 7 form thereby the oily waste to be cleaned by the system 1, which oily waste to be cleaned comprises water, solids and at least one fuel oil. The water removal tank 7 is further arranged to accommodate the oily waste to be cleaned.

More specifically, in the embodiment shown in Figure 1a the first transferring arrangement 3 comprises a third transferring arrangement 5, a collecting tank 4 and a fourth transferring arrangement 8.

The third transferring arrangement 5 is arranged for transferring fuel oil waste from the four fuel oil treatment devices 2a-d and the engine 6b to the collecting tank 4. In the embodiment shown in Figure 1a, the third transferring arrangement 5 comprises tank inlet pipes 5a-e. The third transferring arrangement 5 may further comprise one or more pumps for performing the transfer, one or more further pipes, and/or one or more intermediate collecting tanks (not shown). In further alternatives, the third transferring arrangement 5 comprises another number of tank inlet pipes and/or one or more further pipes. For example, in alternatives the third transferring arrangement 5 comprises only one tank inlet pipe, but further transfer pipes that transfer fuel oil waste from the fuel oil treatment devices and merge with each other and/or with the tank inlet pipe.

The collecting tank 4 is arranged to receive fuel oil waste from the four fuel oil treatment devices 2a-d via tank inlet pipes 5a-d and to receive fuel oil waste from the engine 6b via the tank inlet pipe 5e such that fuel oil wastes are collected in the collecting tank 4. Thus, fuel oil wastes from the fuel oil treatment devices 2a-d and the engine 6b are pooled/collected in the collecting tank 4.

The fourth transferring arrangement 8 is arranged for transferring collected fuel oil waste from the collecting tank 4 to the water removal tank 7. In the embodiment shown in Figure 1a, the fourth transferring arrangement 8 comprises a pump 8a and a transfer pipe 8b.

Thus, in the embodiment shown in Figure 1a, the water removal tank 7 is arranged to collect fuel oil waste provided by the four fuel oil treatment devices 2a-d and the engine 6b via the collecting tank 4, i.e. fuel oil waste from the fuel oil waste sources 2a-d and 6b are first collected in the collecting tank 4 and the collected fuel oil waste is there after transferred to the water removal tank 7.

The system 1 shown in Figure 1a comprises four different types of fuel oil treatment devices 2a-d. In alternatives of the system 1 shown in Figure 1a, the number and/or types of fuel oil treatment devices may differ. In addition, in alternatives the system 1 may comprise two or more of the same type of fuel oil treatment device, e.g. in alternatives the system 1 may comprise two separators, two filters etc. In these alternatives the third transferring arrangement 5 is arranged to transfer fuel oil waste from the alternative number and/or types of fuel oil treatment devices to the collecting tank 4. In alternatives the collecting tank 4 may also be arranged to receive further waste material such as further water and/or solids and/or oils provided by one or more other waste sources such that the further waste material is pooled with the fuel oil waste in the collecting tank 4. The third transferring arrangement 5 is then arranged to also transfer the further waste material to the collecting tank 4.

Furthermore, the system 1 of Figure 1a comprises a water removal arrangement 10 for removing water from the oily waste accommodated in the water removal tank 7 and thereby producing dried oily waste. In the system 1 shown in Figure 1a the water removal arrangement 10 comprises a heating arrangement 9, a water vapour outlet 10a and a water vapour outlet pipe 10b. The heating arrangement 9 is arranged to supply heat to the oily waste in the water removal tank 7 so as to boil off water from the oily waste or facilitate evaporation of water from the oily waste. In the system 1 shown in Figure 1a the heat supply means 9 comprises heating coils 9a, e.g. electric coils. As shown in Figure 1a the heating coils 9a may be positioned in the bottom of the water removal tank 7, but may alternatively be positioned at any other suitable position in the water removal tank 7. In another alternative the heat supply means comprises any other heating means positioned in or connected to the water removal tank 7. As indicated with dashed lines in Figure 1a, the system 1 may further optionally comprise a water tank 10d for collecting water originating from water vapour that has been removed from the water removal tank 7 via the water vapour outlet 10a and water vapour pipe 10b and has been condensed.

In addition, the system 1 of Figure 1a comprises a two-phase centrifugal separator 12 and a second transferring arrangement 11.

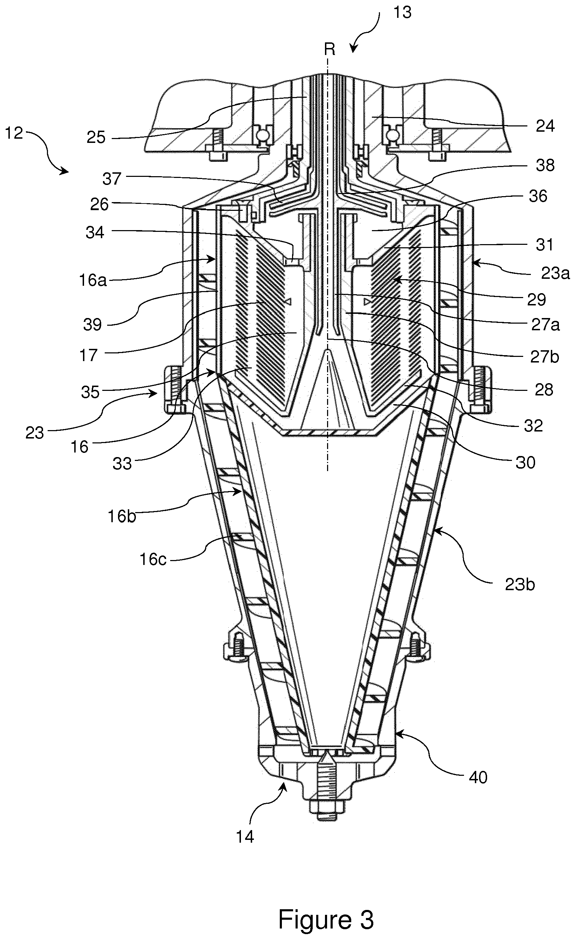

The two-phase centrifugal separator 12 is arranged to separate dried oily waste produced in the water removal tank 7 and introduced into the separator 12 into a cleaned oil phase and a sludge phase and comprises a liquid inlet 13 for dried oily waste, a sludge outlet 14 for the sludge phase and a liquid outlet 15 for the cleaned oil phase. In addition, in the embodiment shown in Figure 1a the centrifugal separator 12 comprises a screw conveyor 16 and a stack of separation discs 17 (see Figure 3). The screw conveyor 16 is arranged to transport the sludge phase towards and out of the sludge outlet 14. A more detailed schematic description of the working principles of one example of the two-phase centrifugal separator 12 is disclosed in relation to Figure 3 below.

The second transferring arrangement 11 is arranged for transferring dried oily waste from the water removal tank 7 to the liquid inlet 13 of the two-phase centrifugal separator 12. In the embodiment shown in Figure 1a, the second transferring arrangement comprises a pump 11 a and a transfer pipe 11 b.

Furthermore, the system 1 shown in Figure 1a comprises a sludge phase tank 18 arranged to receive the discharged sludge phase from the separator 12 and an oil phase tank 19 arranged to receive the discharged cleaned oil phase from the separator 12.

As indicated with dashed lines in Figure 1a the system 1 may optionally further comprise a fifth transferring arrangement 20 for transferring the discharged cleaned oil phase from the oil phase tank 19 to a boiler fuel tank 21 for reuse as boiler fuel. In the embodiment shown in Figure 1a, the fifth transferring arrangement 20 comprises a pump 20a and a transfer pipe 20b. Alternatively or additionally, the system 1 may optionally further comprise a sixth transferring arrangement 22 for transferring the discharged cleaned oil phase from the oil phase tank 19 to the fuel oil bunker tank 6a for reuse as fuel. In the embodiment shown in Figure 1a, the sixth transferring arrangement 22 comprises a pump 22a and a transfer pipe 22b.

As shown in Figure 1a, a recirculation loop may be formed in case the system 1 comprises the sixth transferring arrangement 22, whereby the discharged cleaned oil phase may be recirculated to the fuel oil bunker tank 6a.

A method for cleaning oily waste according to the present disclosure will now be described in connection with the system of Figure 1a.

When the system of Figure 1a is utilized for cleaning oily waste, fuel oil waste from the fuel oil treatment devices 2a-d and the engine 6b are transferred to the collecting tank 4 via the tank inlet pipes 5a-e of the third transferring arrangement 5 such that fuel oil waste is pooled/collected in the collecting tank 4. Fuel oil waste collected/pooled in the collecting tank 4 is thereafter transferred from the collecting tank 4 to the water removal tank 7 via the transfer pipe 8a by means of the pump 8b of the fourth transferring arrangement 8. The fuel oil waste collected in the water removal tank form the oily waste to be cleaned, which comprises water, solids and at least one fuel oil.

Accordingly, oily waste to be cleaned is provided in the water removal tank 7 by means of two sub-steps, i.e. fuel oil wastes are collected in the collecting tank 4 in a first sub-step and collected fuel oil waste is thereafter transferred from the collecting tank 4 to the water removal tank 7 in a second sub-step so as to pool/collect fuel oil waste in the water removal tank 7 and thereby form the oily waste to be cleaned in the water removal tank 7.

In the water removal tank 7 the oily waste to be cleaned is heated by the heating coils 9a so as to remove water from the oily waste and thereby produce a dried oily waste. The oily waste to be cleaned may be heated such that water is boiled off from the oily waste. Thus, the oily waste is then heated to a temperature at which water boils off, but at which the oil(s) comprised in the oily waste is/are not vaporized. Alternatively, the oily waste to be cleaned may be heated such that evaporation of water is facilitated, i.e. heated to a temperature at which evaporation of water is facilitated. Produced water vapour exits the water removal tank 7 via the water vapour outlet 10a and the water vapour outlet pipe 10b. Optionally, water vapour may thereafter be collected after condensation in the water tank 10d.

Dried oily waste produced in the water removal tank 7 is thereafter introduced into the separator 12 via the transfer pipe 11b and the liquid inlet 13 by means of the pump 11a of the second transferring arrangement 11. The separator 12 separates the dried oily waste into a cleaned oil phase and a sludge phase comprising solids from the dried oily waste. The sludge phase is discharged through the sludge outlet 14 into the sludge phase tank 18 by means of the screw conveyor 16 (see Figure 3) of the separator 12. The cleaned oil phase is discharged through the liquid outlet 15 into the oil phase tank 19.

Optionally, the discharged cleaned oil phase may then be transferred from the oil phase tank 19 via the transfer pipe 20b by means of the pump 20a of the fifth transferring arrangement 20 to the boiler fuel tank 21 and reused as boiler fuel. Alternatively, in case the discharged cleaned oil phase comprises one or more fuel oils and less than an acceptable level of other oils, the discharged cleaned oil phase may then optionally be transferred from the oil phase tank 19 via the transfer pipe 22b by means of the pump 22a of the sixth transferring arrangement 22 to the fuel oil bunker tank 6a.

The content of the sludge tank 18 can be landed ashore as dry waste.

Figure 1b shows a schematic view of another embodiment of the system 1 according to the present disclosure. The system 1 of Figure 1b corresponds to the system 1 of Figure 1a except for concerning the heating arrangement 9. In the system 1 of Figure 1b the heating arrangement 9 comprises a steam inlet 9c in the water removal tank 7, a steam inlet pipe 9d, a condensed steam outlet 9e in the water removal tank 7 and a condensed steam outlet pipe 9f. In addition, the heating arrangement 9 of the system 1 of Figure 1b comprises a device 9b for generating heated steam and steam coils 9a provided in/at the bottom of the water removal tank 7. The steam inlet 9c is then arranged to transfer heated steam from the device for generating heated steam 9b to the steam coils 9a and the condensed steam outlet 9e is then arranged to transfer condensed steam from the steam coils 9a back to the device 9b for generating heated steam. The device 9b for generating heated steam may comprise a boiler.

Thus, when the system of Figure 1b is utilized for cleaning oily waste provided in the water removal tank 7, the removal of water is performed by means of heating the oily waste by heated steam introduced into the steam coils 9a provided in the water removal tank 7. More specifically, heated steam is generated by the device 9b and introduced into the water removal tank 7 via the steam inlet pipe 9d and the steam inlet 9c. After heating the oily waste, condensed steam is led out of the water removal tank 7 via the condensed steam outlet 9e and the condensed steam outlet pipe 9f and returned to the device 9b.

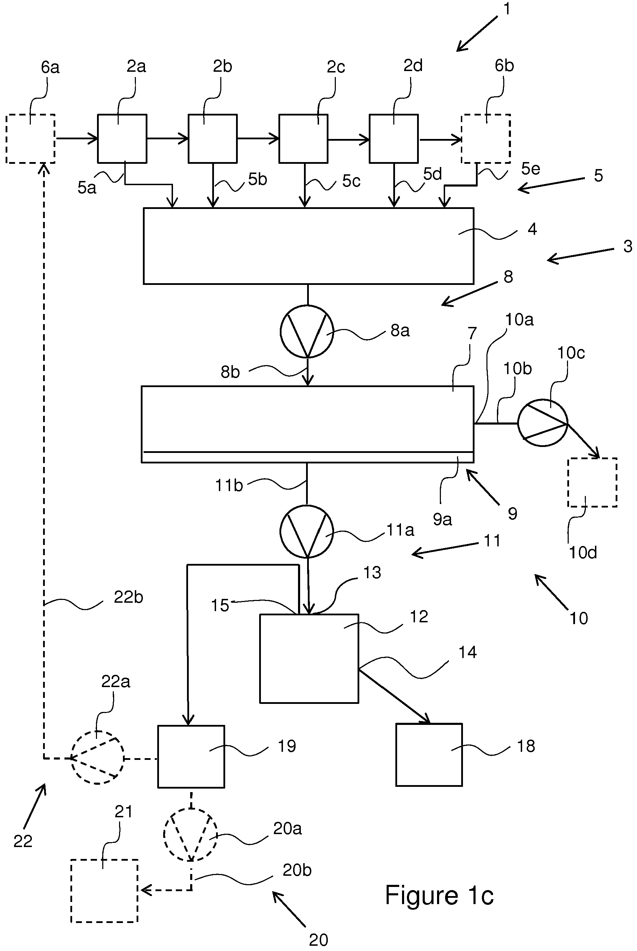

Figure 1c shows a schematic view of still another embodiment of the system 1 according to the present disclosure. The system 1 of Figure 1c corresponds to the system 1 of Figure 1a except for concerning the water removal arrangement 10. In the embodiment shown in Figure 1c, the water removal arrangement 10 comprises further an evacuation fan 10c arranged to evacuate water vapour from the water removal tank 7. The evacuation fan 10c is connected to the water vapour outlet 10a via the water vapour outlet pipe 10b.

Thus, when the system of Figure 1c is utilized for cleaning oily waste provided in the water removal tank 7, water vapour evaporated or boiled off from the oily waste is evacuated from the water removal tank 7 via the water vapour outlet 10a and the water vapour outlet pipe 10b by means of the evacuation fan 10c.

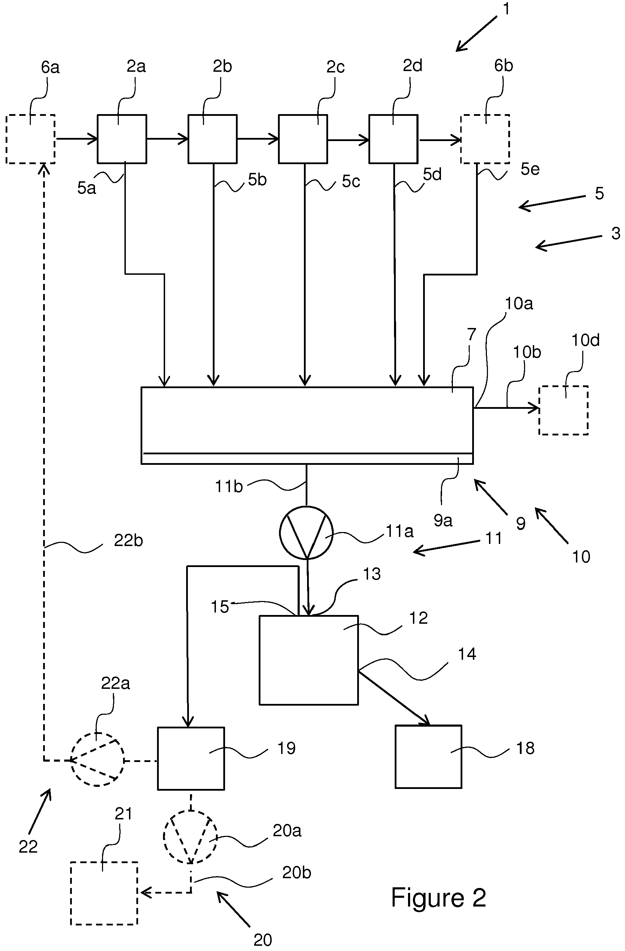

Figure 2 shows a schematic view of another embodiment of the system 1 according to the present disclosure. The system 1 of Figure 2 corresponds to the system 1 of Figure 1a except for concerning the fact that the system 1 of Figure 2 does not comprise the collecting tank 4 and the fourth transferring arrangement 8 of the system 1 of Figure 1a.

In the embodiment of Figure 2, the water removal tank 7 is arranged to receive fuel oil waste provided by the four fuel oil treatment devices 2a-d and the engine 6b via the tank inlet pipes 5a-e of the third transferring arrangement 5. In the embodiment shown in Figure 2 the first transferring arrangement 3 is constituted by the third transferring arrangement 5.

Thus, fuel oil waste from the fuel oil treatment devices 2a-d and the engine 6b are pooled/collected in the water removal tank 7 and form thereby oily waste to be cleaned in the water removal tank 7. In other words, oily waste to be cleaned, which oily waste comprises water, solids and at least one fuel oil, is provided in the water removal tank 7 by pooling/collecting fuel oil waste from the fuel oil treatment devices 2a-d and the engine 6b in the water removal tank 7.

In alternatives the water removal tank 7 may be arranged to receive fuel oil waste from another number of fuel oil waste sources and/or other types of fuel oil waste sources and/or other combinations of fuel oil waste sources and optionally further waste material, such as further water and/or solids and/or oil from one or more other waste sources.

When the system of Figure 2 is utilized for cleaning oily waste, oily waste to be cleaned, which comprises water, solids and at least one fuel oil, is provided in the water removal tank 7 by collecting/pooling fuel oil wastes provided by the fuel oil treatment devices 2a-d and the engine 6 in the water removal tank 7. Thus, oily waste to be cleaned is formed in the water removal tank 7 and comprises fuel oil waste generated by the four fuel oil treatment devices 2a-d and the engine 6.

Figure 3 shows a schematic view of one example of a two-phase centrifugal separator 12 that may be utilized in the method and system according to the present disclosure, for example in the embodiments shown in Figures 1a-c and 2.

The two-phase centrifugal separator 12 comprises a rotor 23 which is rotatable at a certain speed around a vertical axis of rotation R, and a screw conveyor 16 which is arranged in the rotor 23 and rotatable around the same axis of rotation R but at a speed which differs from the rotation speed of the rotor 23.

Two-phase centrifugal separator 12 is intended to be suspended vertically in a manner indicated by WO 99/65610 A1. The device necessary for suspending and driving two-phase centrifugal separator 12 is therefore not described here.

The rotor 23 has an essentially cylindrical upper rotor portion 23a, and an essentially conical lower rotor portion 23b, the rotor portions 23a and 23b being connected to one another by screws. Alternative connection members can of course be used. The cylindrical rotor portion 23a includes an extension axially upwards in the form of a hollow rotor shaft 24, which is connected to a drive device (not shown) for rotating the rotor 23 around the axis of rotation R.

A further hollow shaft 25 extends into the rotor 23 through the interior of the hollow rotor shaft 24. This hollow shaft 25 supports the screw conveyor 16 by means of screws 26, is drivingly connected to the screw conveyor 16, and is hereinafter called the conveyor shaft 25. The screw conveyor 16 comprises a cylindrical upper conveyor portion 16a which extends axially inside the cylindrical rotor portion 23a, a conical lower conveyor portion 16b which extends axially inside the conical lower rotor portion 23b, and a conveyor flight 16c which extends in a helical manner along the upper cylindrical portion 16a and the lower conical portion 16b of the screw conveyor 16. The screw conveyor 16 may of course have more than one conveyor flight 16c, e.g. two or three conveyor flights, which all extend in a helical manner along the inside of the rotor 23.

The separator 12 comprises a liquid inlet 13, which in turn comprises a separator inlet pipe 27a and an inlet chamber 28. The separator inlet pipe 27a for dried oily waste which is to be treated in the rotor 23 extends through the conveyor shaft 25 and leads on into a central sleeve 27b in the interior of the screw conveyor 16. The central sleeve 27b delimits the inlet chamber 28 for the dried oily waste, wherein the inlet chamber 28 communicates with a separation chamber 29 via radially extending distribution channels 30.

The separation chamber 29 is an annular space that surrounds the inlet chamber 28 and comprises a stack of truncated conical separation discs 17. The stack is fitted radially inside the cylindrical portion 16a of the screw conveyor 16 and arranged coaxially with the axis of rotation R. The conical separation discs 17 are held together axially between an upper truncated conical support plate 31 and a lower truncated conical support plate 32. As can be seen, the lower support plate 32 is formed in one piece with the central sleeve 27b. The separation discs 17 comprise holes which form channels 33 for axial flow and distribution of liquid through the stack of separation discs 17. The lower support plate 32 comprises a corresponding hole (not shown), whereby the distribution channels 30 communicate with the channels 33 for axial flow of liquid in the stack of separation discs 17. The upper support plate 31 comprises a number of holes 34 which connect a radially inner annular space 35, within the stack of separation discs 17, with a liquid outlet chamber 36. The liquid is the separated oil phase. A so called paring disc 37 for discharging the cleaned oil phase is disposed within the outlet chamber 36. The paring disc 37 is stationary and firmly connected to the separator inlet pipe 27a, wherein the paring disc 37 is communicating with an outlet channel 38 extending in an outlet which surrounds the separator inlet pipe 27a.

The cylindrical portion 16a of the screw conveyor 16 radially surrounds the stack of separation discs 17, wherein the cylindrical portion 16a comprises a number of axially extending apertures 39 which are distributed round the axis of rotation R. The axially extending apertures 39 are provided to allow for the separated solids to pass through and deposit on the inside wall of the cylindrical portion 23a of the rotor 23. Liquid will of course also be able to pass through the apertures 39 in the cylindrical portion 16a of the screw conveyor 16.

The rotor 23 has at its lower end a sludge (solids) outlet 14. In connection with this sludge outlet 14, the rotor could be surrounded by a container (not shown in Figure 3) for intercepting and collecting the sludge which leaves the sludge outlet 14. The solids are transported by means of the conveyor flight 16c towards and out of the sludge outlet 14. Accordingly, during operation, the screw conveyor 16 is arranged to rotate at a different speed than the rotor 23, whereby the sludge is discharged by the conveyor flight 16c of the screw conveyor 16. This differential speed between the rotor 23 and the screw conveyor 16 may be constant or varied in a known manner; depending on for instance a desired dryness on the discharged sludge and/or the amount of torque needed to drive the screw conveyor 16 for the discharge of the sludge. If the sludge is very difficult to discharge, the rotor 23 may even be operated in a cycle comprising a solids discharge phase of lower rotational speed than a separation phase. In this way, the sludge is discharged more easily as the centrifugal forces inside the rotor 23 are reduced at the lower speed. A known way of operating the centrifugal separator in such a cycle is further described in WO 2011/053224 A1. Furthermore, after an interrupted (or paused) operation, the centrifugal separator may need to be cleared before a restart. Hence, there could be some remaining mixture of solids and liquid inside the stack of separation discs 17, which need to be cleared prior to resuming a separating operation. This may be achieved by bringing the screw conveyor 16 with the stack of separation discs 17 into rotation within a stationary (and empty) rotor 23. In this way, the remaining mixture will be thrown out of the stack 17 and into the inside wall of the stationary rotor 23, whereon it is easily discharged out of the sludge outlet 14 by means of gravity and the rotating screw conveyor 16.

The screw conveyor 16 may be made in one piece of a polymer material, such as plastic or nylon, which could be fibre-reinforced. The conical portion 16b has a hollow interior or cavity, which is either sealed or open to the surrounding. If desired, the cavity could be filled with some material having a relatively low density, such as cellular plastic or the like. Furthermore, the lower conical portion 23b of the rotor 23 is arranged with a support device 40 for the screw conveyor 16.

While the invention has been described in connection with various exemplary embodiments, it is to be understood that the invention is not to be limited to the disclosed exemplary embodiments, on the contrary, it is intended to cover various modifications and equivalent arrangements within the appended claims. Furthermore, it should be recognized that any disclosed form or embodiment of the invention may be incorporated in any other disclosed or described or suggested form or embodiment as a general matter of design choice. It is the intention, therefor, to be limited only as indicated by the scope of the claims.

## Claims

1. A method for cleaning oily waste comprising water, solids and at least one fuel oil, wherein the method comprises the steps of:
- providing oily waste to be cleaned, which provided oily waste to be cleaned comprises water, solids and at least one fuel oil;
- removing water from said provided oily waste to be cleaned so as to produce dried oily waste, comprising heating said provided oily waste so as to boil off water from said provided oily waste and/or so as to facilitate evaporation of water from said provided oily waste;
- introducing dried oily waste produced in said step of removing water into a two-phase centrifugal separator (12) through a liquid inlet (13) of said two-phase centrifugal separator, which further comprises a sludge outlet (14) and a liquid outlet (15) and is free of further liquid outlets, wherein said two-phase centrifugal separator (12) comprises a screw conveyor (16) and a stack of separation discs (17);
- separating said dried oily waste in said two-phase centrifugal separator (12) into a cleaned oil phase and a sludge phase comprising solids from said dried oily waste;
- discharging said sludge phase through the sludge outlet (14) of said two-phase centrifugal separator (12) by means of said screw conveyor (16); and
- discharging said cleaned oil phase through the liquid outlet (15) of said two-phase centrifugal separator (12).

2. The method according to claim 1, wherein said at least one fuel oil constitute at least 80 wt% of all oil of said provided oily waste to be cleaned.

3. The method according to claim 1 or 2, wherein said provided oily waste to be cleaned comprises a single oil, which single oil is a fuel oil.

4. The method according to any one of claims 1-3, wherein the method further comprises a step of transferring said discharged cleaned oil phase to a boiler fuel tank (21).

5. The method according to any one of claims 1-3, wherein the method further comprises a step of transferring said discharged cleaned oil phase to a fuel oil bunker tank (6a) or a fuel oil settling tank.

6. A system (1) for cleaning oily waste comprising water, solids and at least one fuel oil, wherein the system (1) comprises:
- at least one fuel oil treatment device (2a, 2b, 2c, 2d) for pre-treatment of fuel oil before use in an engine installation on board a ship or in a power plant, each fuel oil treatment device (2a, 2b, 2c, 2d) providing fuel oil waste comprising water, solids and at least one fuel oil during use for pre-treatment of fuel oil;
- a water removal tank (7) arranged to receive fuel oil waste provided by said at least one fuel oil treatment device (2a, 2b, 2c, 2d) and optionally further waste material provided by one or more other waste sources such that fuel oil waste and optionally further waste material are collected in said water removal tank (7) and thereby form said oily waste to be cleaned, said water removal tank (7) further being arranged to accommodate said formed oily waste to be cleaned, whereby said oily waste to be cleaned comprises water, solids and at least one fuel oil;
- a first transferring arrangement (3) for transferring fuel oil waste from said at least one fuel oil treatment device (2a, 2b, 2c, 2d) to said water removal tank (7) and optionally transferring further waste material provided by one or more other waste sources to said water removal tank (7);
- a water removal arrangement (10) for removing water from said oily waste accommodated in said water removal tank (7) and thereby producing dried oily waste, said water removal arrangement (10) comprising a heating arrangement (9) arranged to supply heat to said oily waste to be cleaned accommodated in said water removal tank (7) so as to boil off water from said oily waste or so as to facilitate evaporation of water from said oily waste;
- a two-phase centrifugal separator (12) for separation of dried oily waste produced in said water removal tank (7) into a cleaned oil phase and a sludge phase comprising solids from said dried oily waste, whereby the centrifugal separator (12) comprises a liquid inlet (13) for the dried oily waste, a sludge outlet (14) for the sludge phase and a liquid outlet (15) for the cleaned oil phase and is free of further liquid outlets, wherein said two-phase centrifugal separator (12) comprises a screw conveyor (16) and a stack of separation discs (17), wherein said screw conveyor (16) is arranged to transport said sludge phase towards and out of said sludge outlet (14), and
- a second transferring arrangement (11) for transferring dried oily waste from the water removal tank (7) to said liquid inlet (13) of said two-phase centrifugal separator (12).

7. The system (1) according to claim 6, wherein said first transferring arrangement (3) comprises:
- at least one collecting tank (4), wherein each collecting tank (4) is arranged to receive fuel oil waste provided by at least one of said at least one fuel oil treatment device (2a, 2b, 2c, 2d) and optionally further waste material provided by one or more other waste sources such that fuel oil waste and optionally further waste material are collected in each collecting tank (4);
- a third transferring arrangement (5) for transferring fuel oil waste from each of said at least one fuel oil treatment device (2a, 2b, 2c, 2d) to at least one of said at least one collecting tank (4) and optionally transferring further waste material from one or more other waste sources to one or more of said at least one collecting tank (4), and
- a fourth transferring arrangement (8) for transferring collected fuel oil waste and optionally collected further waste material from said at least one collecting tank (4) to said water removal tank (7).

8. The system (1) according to any one of claims 6-7, wherein said heating arrangement (9) comprises heating coils (9a) provided in said water removal tank (7).

9. The system (1) according to claim 8, wherein said heating arrangement (9) comprises steam coils (9a) provided in said water removal tank (7), a device (9b) for generating heated steam to be supplied to the steam coils (9a), a steam inlet (9c) in said water removal tank (7) and a condensed steam outlet (9e) in the water removal tank (7).

10. The system (1) according to any one of claims 6-9, wherein said water removal arrangement (10) further comprises a water vapour outlet (10a) in said water removal tank (7) and an evacuation fan (10c) arranged to evacuate water vapour from said water removal tank (7).

11. The system (1) according to any one of claims 6-10, wherein said system (1) further comprises a fifth transferring arrangement (20) for transferring said discharged cleaned oil phase to a boiler fuel tank (21).

12. The system (1) according to any one of claims 6-11, wherein said system (1) further comprises a sixth transferring arrangement (22) for transferring said discharged cleaned oil phase to a fuel oil bunker tank (6a) or a fuel oil settling tank.

## Patentansprüche

1. Verfahren zum Reinigen von öligem Abfall, welches Wasser, Feststoffe und mindestens ein Heizöl beinhaltet, wobei das Verfahren folgende Schritte beinhaltet:
- Bereitstellen von zu reinigendem öligen Abfall, wobei der bereitgestellte zu reinigende ölige Abfall Wasser, Feststoffe und mindestens ein Heizöl beinhaltet;
- Entfernen von Wasser aus dem bereitgestellten zu reinigenden öligen Abfall zum Erzeugen von getrocknetem öligem Abfall, beinhaltend Erhitzen des bereitgestellten öligen Abfalls zum auskochen von Wasser aus dem bereitgestellten öligen Abfall und/oder zum Erleichtern von Verdunstung von Wasser aus dem bereitgestellten öligen Abfall;
- Einleiten von getrocknetem öligem Abfall, welcher in dem Schritt des Entfernens von Wasser erzeugt wurde, in einen Zweiphasen-Zentrifugalabscheider (12) durch einen Flüssigkeitseinlass (13) des Zweiphasen-Zentrifugalabscheiders, welcher zudem einen Schlammauslass (14) und einen Flüssigkeitsauslass (15) beinhaltet und frei von zusätzlichen Flüssigkeitsauslässen ist, wobei der Zweiphasen-Zentrifugalabscheider (12) einen Schneckenförderer (16) und einen Stapel von Abscheideplatten (17) beinhaltet;
- Abscheiden des getrockneten öligen Abfalls in dem Zweiphasen-Zentrifugalabscheider (12) in eine gereinigte Ölphase und eine Schlammphase, welche Feststoffe aus dem getrockneten öligen Abfall beinhaltet;
- Ablassen der Schlammphase durch den Schlammauslass (14) des Zweiphasen-Zentrifugalabscheiders (12) mithilfe des Schneckenförderers (16); und
- Ablassen der gereinigten Ölphase durch den Flüssigkeitsauslass (15) des Zweiphasen-Zentrifugalabscheiders (12).

2. Verfahren nach Anspruch 1, bei welchem das mindestens eine Heizöl mindestens 80 Gewichtsprozent des gesamten Öls des bereitgestellten zu reinigenden öligen Abfalls bildet.

3. Verfahren nach Anspruch 1 oder 2, bei welchem der bereitgestellte zu reinigende ölige Abfall ein einziges Öl beinhaltet, wobei das einzige Öl ein Heizöl ist.

4. Verfahren nach einem der Ansprüche 1 bis 3, bei welchem das Verfahren zudem einen Schritt des Übertragens der abgelassenen gereinigten Ölphase an einen Heizkessel-Öltank (21) beinhaltet.

5. Verfahren nach einem der Ansprüche 1 bis 3, bei welchem das Verfahren zudem einen Schritt des Übertragens der abgelassenen gereinigten Ölphase an einen Heizöl-Bunkertank (6a) oder einen Heizöl-Absetztank beinhaltet.

6. System (1) zum Reinigen von öligem Abfall, welcher Wasser, Feststoffe und mindestens ein Heizöl beinhaltet, wobei das System (1) Folgendes beinhaltet:
- mindestens eine Heizölaufbereitungsvorrichtung (2a, 2b, 2c, 2d) zur Vorbehandlung von Heizöl vor dem Gebrauch in einer Motoranlage an Bord eines Schiffs oder in einem Kraftwerk, wobei jede Heizölaufbereitungsvorrichtung (2a, 2b, 2c, 2d) Heizölabfall bereitstellt, welcher Wasser, Feststoffe und mindestens ein Heizöl im Zuge des Gebrauchs zur Vorbehandlung von Heizöl bereitstellt;
- einen Wasserentfernungstank (7), welcher angeordnet ist, um Heizölabfall aufzunehmen, welcher durch die mindestens eine Heizölaufbereitungsvorrichtung (2a, 2b, 2c, 2d) bereitgestellt wird und optionsweise zusätzliches Abfallmaterial, welches durch eine oder mehrere andere Abfallquellen in einer Weise bereitgestellt wird, dass Heizölabfall und optionsweise zusätzliches Abfallmaterial in dem Wasserentfernungstank (7) gesammelt wird und dadurch den zu reinigenden öligen Abfall bildet, wobei der Wasserentfernungstank (7) zudem angeordnet ist, um den gebildeten, zu reinigenden öligen Abfall aufzunehmen, wodurch der zu reinigende ölige Abfall Wasser, Feststoffe und mindestens ein Heizöl beinhaltet;
- eine erste Übertragungsanordnung (3) zum Übertragen von Heizölabfall aus der mindestens einen Heizölaufbereitungsvorrichtung (2a, 2b, 2c, 2d) an den Wasserentfernungstank (7) und optionsweise zum Übertragen von zusätzlichem Abfallmaterial, welches durch eine oder mehrere Abfallquellen bereitgestellt wird, an den Wasserentfernungstank (7);
- eine Wasserentfernungsanordnung (10) zum Entfernen von Wasser aus dem in dem Wasserentfernungstank (7) aufgenommenen öligen Abfall und hierdurch Erzeugen von getrocknetem öligem Abfall, wobei die Wasserentfernungsanordnung (10) eine Heizanordnung (9) beinhaltet, welche angeordnet ist, um Wärme an den zu reinigenden öligen Abfall, welcher in dem Wasserentfernungstank (7) aufgenommen ist, zuzuführen, um Wasser aus dem öligen Abfall auszukochen oder um eine Verdunstung von Wasser aus dem öligen Abfall zu erleichtern;
- einen Zweiphasen-Zentrifugalabscheider (12) zum Trennen von getrocknetem öligem Abfall, welcher in dem Wasserentfernungstank (7) erzeugt wurde in eine gereinigte Ölphase und eine Schlammphase, welche Feststoffe aus dem getrockneten öligen Abfall beinhaltet, wobei der Zentrifugalabscheider (12) einen Flüssigkeitseinlass (13) für den getrockneten öligen Abfall, einen Schlammauslass (14) für die Schlammphase und einen Flüssigkeitsauslass (15) für die gereinigte Ölphase beinhaltet und frei von zusätzlichen Flüssigkeitsauslässen ist, wobei der Zweiphasen-Zentrifugalabscheider (12) einen Schneckenförderer (16) und einen Stapel von Abscheideplatten (17) beinhaltet, wobei der Schneckenförderer (16) angeordnet ist, um die Schlammphase in Richtung von und aus dem Schlammauslass (14) heraus zu transportieren, und
- eine zweite Übertragungsanordnung (11) zum Übertragen von getrocknetem öligem Schlamm von dem Wasserentfernungstank (7) an den Flüssigkeitseinlass (13) des Zweiphasen-Zentrifugalabscheiders (12).

7. System (1) nach Anspruch 6, bei welchem die erste Übertragungsanordnung (3) Folgendes beinhaltet:
- mindestens einen Sammeltank (4), wobei jeder Sammeltank (4) angeordnet ist, um Heizölabfall aufzunehmen, welcher durch mindestens eine der mindestens einen Heizölaufbereitungsvorrichtung (2a, 2b, 2c, 2d) bereitgestellt wird, und optionsweise zusätzliches Abfallmaterial aufzunehmen, welches durch eine oder mehrere Abfallquellen in einer Weise bereitgestellt wird, dass Heizölabfall und optionsweise zusätzliches Abfallmaterial in jedem Sammeltank gesammelt werden (4);
- eine dritte Übertragungsanordnung (5) zum Übertragen von Heizölabfall aus jeder der mindestens einen Heizölaufbereitungsvorrichtung (2a, 2b, 2c, 2d) an mindestens einen des mindestens einen Sammeltanks (4) und optionsweise zum Übertragen von zusätzlichem Abfallmaterial von einer oder mehreren anderen Abfallquellen an den mindestens eine Sammeltank (4); und
- eine vierte Übertragungsanordnung (8) zum Übertragen von gesammeltem Heizölabfall und optionsweise von gesammeltem zusätzlichem Abfallmaterial von dem mindestens einen Sammeltank (4) an den Wasserentfernungstank (7).

8. System (1) nach einem der Ansprüche 6 bis 7, bei welchem die Heizanordnung (9) Heizschlangen (9a) beinhaltet, die in dem Wasserentfernungstank (7) bereitgestellt sind.

9. System (1) nach Anspruch 8, bei welchem die Heizanordnung (9) Dampfschlangen (9a), welche in dem Wasserentfernungstank (7) bereitgestellt sind, eine Vorrichtung (9b) zum Erzeugen von erhitztem Dampf, welcher an die Dampfschlangen (9a) zugeführt werden soll, einen Dampfeinlass (9c) in dem Wasserentfernungstank (7) und einen Auslass für kondensierten Dampf (9e) in dem Wasserentfernungstank (7) beinhaltet.

10. System (1) nach einem der Ansprüche 6 bis 9, bei welchem die Wasserentfernungsanordnung (10) zudem einen Wasserdunstauslass (10a) in dem Wasserentfernungstank (7) und ein Evakuiergebläse (10c) beinhaltet, welches angeordnet ist, um Wasserdunst aus dem Wasserentfernungstank (7) auszubringen.

11. System (1) nach einem der Ansprüche 6 bis 10, bei welchem das System (10) zudem eine fünfte Übertragungsanordnung (20) zum Übertragen der abgelassenen gereinigten Ölphase an einen Heizkessel-Öltank (21) beinhaltet.

12. System (1) nach einem der Ansprüche 6 bis 11, bei welchem das System (10) zudem eine sechste Übertragungseinheit (22) zum Übertragen der abgelassenen gereinigten Ölphase an einen Heizöl-Bunkertank (6a) oder einen Heizöl-Absetztank beinhaltet.

## Revendications

1. Procédé de nettoyage de résidus huileux comprenant de l'eau, des solides et au moins un combustible, dans lequel le procédé comprend les étapes consistant à :
- fournir un résidu huileux à nettoyer, ledit résidu huileux fourni à nettoyer comprenant de l'eau, des solides et au moins un combustible ;
- éliminer l'eau dudit résidu huileux fourni à nettoyer de façon à produire un résidu huileux séché, comprenant le chauffage dudit résidu huileux de façon à faire s'évaporer l'eau provenant dudit résidu huileux fourni et/ou à faciliter l'évaporation de l'eau dudit résidu huileux fourni ;
- introduire le résidu huileux séché produit dans ladite étape d'élimination de l'eau dans un séparateur centrifuge à deux phases (12) à travers une entrée de liquide (13) dudit séparateur centrifuge à deux phases, qui comprend en outre une sortie de boue (14) et une sortie de liquide (15) et est dénué d'autres sorties de liquides, dans lequel ledit séparateur centrifuge à deux phases (12) comprend un convoyeur à vis (16) et une pile de disques de séparation (17) ;
- séparer ledit résidu huileux séché dans ledit séparateur centrifuge en deux phases (12) en une phase huileuse propre et une phase de boue comprenant des solides provenant dudit résidu huileux séché ;
- décharger ladite phase de boue à travers la sortie de boue (14) dudit séparateur centrifuge à deux phases (12) au moyen dudit convoyeur à vis (16) ; et
- décharger ladite phase huileuse nettoyée à travers la sortie de liquide (15) dudit séparateur centrifuge à deux phases (12).

2. Procédé selon la revendication 1, dans lequel ledit au moins un combustible constitue au moins 80 % en poids de toute l'huile dudit résidu huileux fourni à nettoyer.

3. Procédé selon la revendication 1 ou 2, dans lequel ledit résidu huileux fourni à nettoyer comprend une huile unique, ladite huile unique est un combustible.

4. Procédé selon l'une quelconque des revendications 1 à 3, dans lequel le procédé comprend en outre une étape de transfert de ladite phase huileuse nettoyée déchargée vers un réservoir de combustible de chaudière (21).

5. Procédé selon l'une quelconque des revendications 1 à 3, dans lequel le procédé comprend en outre une étape consistant à transférer ladite phase huileuse nettoyée déchargée vers une soute de combustible (6a) ou un réservoir de décantation de combustible.

6. Système (1) permettant de nettoyer des résidus huileux comprenant de l'eau, des solides et au moins un combustible, dans lequel le système (1) comprend :
- au moins un dispositif de traitement de combustible (2a, 2b, 2c, 2d) pour le pré-traitement de combustible avant l'utilisation dans une installation de moteur à bord d'un navire ou dans une centrale électrique, chaque dispositif de traitement de combustible (2a, 2b, 2c, 2d) fournissant des résidus de combustible comprenant de l'eau, des solides et au moins un combustible pendant l'utilisation pour le pré-traitement du combustible ;
- un réservoir d'élimination de l'eau (7) agencé afin de recevoir des résidus huileux fournis par ledit au moins un dispositif de traitement de combustible (2a, 2b, 2c, 2d), et éventuellement d'autres matériaux de résidus fournis par une ou plusieurs autre(s) source(s) de résidus, de sorte que des résidus de combustible, et éventuellement d'autres matériaux de résidus sont collectés dans ledit réservoir d'élimination de l'eau (7) et forment ainsi ledit résidu huileux à nettoyer, ledit réservoir d'élimination de l'eau (7) étant en outre agencé de façon à recevoir ledit résidu huileux formé à nettoyer, moyennant quoi ledit résidu huileux à nettoyer comprend de l'eau, des solides et au moins un combustible ;
- un premier dispositif de transfert (3) permettant de transférer un déchet de combustible dudit au moins un dispositif de traitement de combustible (2a, 2b, 2c, 2d) vers ledit réservoir d'élimination de l'eau (7), et éventuellement de transférer un autre matériau de résidu fourni par une ou plusieurs autre(s) source(s) de résidus vers ledit réservoir d'élimination de l'eau (7) ;
- un dispositif d'élimination de l'eau (10) permettant d'éliminer l'eau dudit résidu huileux reçu dans ledit réservoir d'élimination de l'eau (7) et de produire ainsi un résidu huileux séché, ledit dispositif d'élimination de l'eau (10) comprenant un dispositif de chauffage (9) agencé afin de fournir de la chaleur audit résidu huileux à nettoyer reçu dans ledit réservoir d'élimination de l'eau (7) de façon à faire s'évaporer l'eau dudit résidu huileux ou à faciliter l'évaporation de l'eau dudit résidu huileux ;
- un séparateur centrifuge à deux phases (12) pour la séparation des résidus huileux séchés produits dans ledit réservoir d'élimination de l'eau (7) en une phase huileuse nettoyée et une phase de boue comprenant des solides provenant desdits résidus huileux séchés, moyennant quoi le séparateur centrifuge (12) comprend une entrée de liquide (13) pour le résidu huileux séché, une sortie de boue (14) pour la phase de boue et une sortie de liquide (15) pour la phase d'huile nettoyée et est dénuée d'autres sorties de liquide, dans lequel ledit séparateur centrifuge à deux phases (12) comprend un convoyeur à vis (16) et une pile de disques de séparation (17), dans lequel ledit convoyeur à vis (16) est agencé afin de transporter ladite phase de boue vers et en sortie de ladite sortie de boue (14), et
- un deuxième dispositif de transfert (11) permettant de transférer un résidu huileux séché du réservoir d'élimination d'eau (7) vers ladite entrée de liquide (13) dudit séparateur centrifuge à deux phases (12).

7. Système (1) selon la revendication 6, dans lequel ledit premier dispositif de transfert (3) comprend :
- au moins un réservoir de collecte (4), dans lequel chaque réservoir de collecte (4) est agencé de façon à recevoir un résidu de combustible fourni par au moins un dudit au moins un dispositif de traitement de combustible (2a, 2b, 2c, 2d), et éventuellement un autre matériau combustible fourni par une ou plusieurs autre(s) autre(s) source(s) de résidus de sorte que les résidus huileux, et éventuellement d'autres matériaux de résidus sont collectés dans chaque réservoir de collecte (4) ;
- un troisième dispositif de transfert (5) permettant de transférer un résidu de combustible de chacun desdits au moins un dispositif de traitement de combustible (2a, 2b, 2c, 2d) vers au moins un desdits au moins un réservoir de collecte (4), et éventuellement de transférer un matériau de résidu supplémentaire d'une ou plusieurs autre(s) source(s) de résidus vers un ou plusieurs desdits au moins un réservoir de collecte (4), et
- un quatrième dispositif de transfert (8) permettant de transférer le résidu de combustible collecté, et éventuellement l'autre matériau de résidu collecté dudit au moins un réservoir de collecte (4) vers ledit réservoir d'élimination de l'eau (7).

8. Système (1) selon l'une quelconque des revendications 6 à 7, dans lequel ledit dispositif de chauffage (9) comprend des bobines de chauffage (9a) fournies dans ledit réservoir d'élimination de l'eau (7).

9. Système (1) selon la revendication 8, dans lequel ledit dispositif de chauffage (9) comprend des serpentins (9a) fournis dans ledit réservoir d'élimination de l'eau (7), un dispositif (9b), permettant de générer de la vapeur chauffée à alimenter aux serpentins (9a), une entrée de vapeur (9c) dans ledit réservoir d'élimination de l'eau (7) et une sortie de vapeur condensée (9e) dans le réservoir d'élimination d'eau (7).

10. Système (1) selon l'une quelconque des revendications 6 à 9, dans lequel ledit dispositif d'élimination de l'eau (10) comprend en outre une sortie de vapeur d'eau (10a) dans ledit réservoir d'élimination de l'eau (7) et un ventilateur d'évacuation (10c) agencé de façon à évacuer la vapeur d'eau dudit réservoir d'élimination de l'eau (7).

11. Système (1) selon l'une quelconque des revendications 6 à 10, dans lequel ledit système (1) comprend en outre un cinquième dispositif de transfert (20) permettant de transférer ladite phase huileuse nettoyée déchargée vers un réservoir de combustible de chaudière (21).

12. Système (1) selon l'une quelconque des revendications 6 à 11, dans lequel ledit système (1) comprend en outre un sixième dispositif de transfert (22) permettant de transférer ladite phase huileuse nettoyée déchargée vers une soute de combustible (6a) ou un réservoir de décantation de combustible.
